# EUROPEAN PATENT APPLICATION

(11) **EP 3 982 505 A1**
(43) Date of publication of application: **13.04.2022**
(21) Application number: 20201116.9
(22) Date of filing: 09.10.2020
(51) Int. Cl.: H02J 3/38

(54) **CONVERTER SYSTEM**

(71) Applicant: ABB Schweiz AG, 5400 Baden (CH)
(72) Inventor: Maksimainen, Petri, 00380 Helsinki (FI); Rekorius, Keijo, 00380 Helsinki (FI); Mattila, Jarkko, 00380 Helsinki (FI)
(74) Representative: Kolster Oy Ab

(57) **Abstract**

A converter system and a method in connection with a converter system. The converter system comprising a generator side converter connectable to a generator and a grid side converter connectable to a grid, the generator side converter and the grid side converter being connected to each other with a DC bus, wherein the converter system comprises further a DC/DC converter and a battery-energy storage system, the DC/DC converter being connected between the DC bus and the battery-energy storage system, wherein the DC/DC converter is adapted to control the DC link voltage and the grid side converter is adapted to be operated with a power reference.

## Description

### FIELD OF THE INVENTION

The invention relates to converter, and particularly to a converter used in connection with a generator.

### BACKGROUND OF THE INVENTION

Renewable energy sources are used commonly to provide electrical energy to a power grid. For example wind energy or tidal energy are converted to electrical energy and fed to a grid. As known, wind energy is captured using a turbine which transmits the power of the wind to rotate a generator. The generator produces electrical energy which is converted to a suitably form to be fed to the grid. Similarly in connection with other energy sources, a generator is rotated and electrical power is generated and fed to the grid.

The above energy forms, for example, are typically fluctuating and uncontrolled, and therefore the obtained power is not constant. Utility companies provide certain grid codes which require the generated power to meet certain requirements. These requirements may relate to the operation of the generator system in connection with disturbances or to quality of power that is allowed to be fed to the grid.

In connection with wind power, the fluctuation of electrical power fed to the grid may be problematic. The changing wind conditions affect directly the generated power and also the power fed to the grid fluctuates accordingly. The fluctuating electrical power may cause certain problems and may not be allowable by some grid codes.

The issue of fluctuating power has been solved with a large electric storage system. Such an electrical storage is connected between the output of the wind power generator system and the grid. The power from the wind power generator is stored in the storage system. The power from the storage system can be fed to the grid in a controlled manner such that the power level is constant.

Although the above structure solves the issue of fluctuating power, the solution adds large number of additional components to the system and thereby increases the costs. The required additional components include at least the electrical storage, a converter for supplying the electrical storage and an inverter for supplying the grid from the storage. As the electrical storage structure is between the wind power generator system and the grid, the electrical storage structure must be dimensioned for the full power of the generator.

A disadvantage associated with the above arrangement is the increased costs which may make the investment in wind power to be non-affordable.

### BRIEF DESCRIPTION OF THE INVENTIONND

An object of the present invention is to provide a converter and a method so as to alleviate the above disadvantages. The objects of the invention are achieved by a method and an arrangement which are characterized by what is stated in the independent claims. The preferred embodiments of the invention are disclosed in the dependent claims.

The invention is based on the idea of evening the power flow from the converter using an energy storage system situated in the converter. With the energy storage system in the converter, the power flow is evened with a simple and low-cost structure.

An advantage of the converter structure of the invention is that the structure enables the generated power to meet the requirements set to for the evenness of the generated power. As the converter structure of the invention does not required large additional installations, it may enable efficient and affordable operation of stand-alone generators relying on renewable energy sources. Further, the grid-codes of the utility companies relating to evenness of generated power can be met with the converter of the invention. Even further, grid codes may also require that the operation of a generator system is not shut down abruptly. This and additional further aspects of grid codes may be met with the converter structure of the invention.

### BRIEF DESCRIPTION OF THE DRAWINGS

In the following the invention will be described in greater detail by means of preferred embodiments with reference to the attached drawings, in which
Figure 1 shows an embodiment of the converter system of the invention; and
Figure 2 shows power waveforms in connection with the converter system of an embodiment.

### DETAILED DESCRIPTION OF THE INVENTION

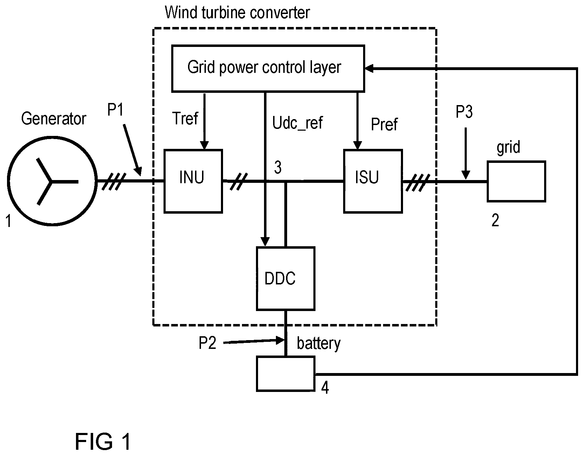

Figure 1 shows an embodiment of the converter system of the invention. The embodiment is described in connection with a wind power generator. However, the converter system of the invention is not limited to be used only in connection with wind power.

Figure 1 shows a generator 1 and a grid 2. The converter system is connected between the generator 1 and the grid 2 so as to feed the power obtained from the generator to the grid. The converter system shown in Figure 1 is a full power converter system. The full power converter system refers to the fact that the generated power is fed through the converter system in full.

The converter system comprises a generator side converter (INU) and a grid side converter (ISU). The generator side converter acts as a rectifier and rectifies the alternating voltage obtained from the generator when the generator is rotating. The converter system comprises also a DC bus which interconnects the generator side converter and the grid side converter. As known, a DC bus has two DC conductors, which are typically referred to as positive and negative rails or conductors. In known full power converter systems, the generator side converter is controlled with a torque reference and while the grid side converter feeds power to the grid and controls the DC bus voltage. When the grid side converter controls the DC voltage such that the DC voltage is in a suitable level for producing required output voltage, the output current from the grid side converter fluctuates according to the inputted power from the generator. The fluctuating output current leads to fluctuating power when the DC voltage is controlled to the desired level.

According to the present invention, the converter system comprises a DC/DC converter (DDC) and a battery-energy storage system 4. The DC/DC converter (DDC) is connected between the DC bus and the battery-energy storage system as shown in Figure 1. The DC/DC converter is adapted to control the DC bus voltage and the grid side converter is adapted to be operated with a power reference.

Thus in the present invention, an additional DC/DC converter is connected to the converter system, and more particularly the DC/DC converter is connected to the DC bus of the converter system. The converter system of the invention comprises a battery-energy storage system which is connected through the DC/DC converter to the DC bus which interconnects the grid side and the generator side converters.

The DC/DC converter is operated to control the voltage of the DC bus to a desired level. In order to control the voltage, the DC/DC converter receives a DC reference value Udc_ref which is preferably kept constant during the operation of the converter system. The DC/DC converter is a bi-directional converter and is thus able to feed power both towards the battery-energy storage system and towards the DC bus. The DC/DC converter is operated to keep the voltage of the DC bus at its reference value Udc_ref. The operation of the DC/DC converter is thus such, that when the actual DC bus voltage exceeds the reference value, the DC/DC converter feeds power to the battery-energy storage system so as to lower the DC bus voltage. If the voltage of the DC bus is below the reference value, the DC/DC converter draws power from the battery-energy storage system and feeds it to the DC bus so as to increase the voltage of the DC bus.

In the invention, the grid side converter (ISU) is adapted to be operated with a power reference Pref. As mentioned above, in known structures, the grid side converter operates to feed power to the grid while controlling the DC bus voltage. In the present invention, the DC/DC converter controls the DC bus voltage. When the DC bus voltage is controlled to the set value, a power reference may be given to the grid side converter. The grid side converter operates such that it feeds power to the grid according to the given reference value.

The grid side converter is connected to the grid having a grid voltage. In a known manner, the outputted power is dependent on the magnitude of voltage and current. The grid side converter sets the output voltage so that the current to the grid is at a level which produces the desired output power. In the invention, the DC link voltage is kept constant with the DC/DC converter and the battery-energy storage system, and therefore the output power can also be controlled to the desired level. Further, the output power can be controlled to a fixed value, which is in conformity with the requirements set by the grid operator.

According to an embodiment of the invention, the battery-energy storage system is adapted to monitor the state of charge of the battery storage and provide information of the state of charge to an upper level controller. The upper lever controller provides various reference values, including the torque reference Tref provided to the generator side converter, power reference provided to the grid side converter and the DC bus voltage reference provided to the DC/DC converter.

Based on the state of charge of the battery, the value of power reference Pref may be adjusted. If, for example, the state of charge of the battery is low, then the power reference is adjusted to a lower value. The lowering of power reference is due to the limited capacity of the battery storage to provide stabilisation of DC link voltage. The state of charge of the battery may be taken into account, for example, by comparing the state of charge to a certain limit value, and if the state of charge is lower than the limit value, the power reference is lowered to a constant value which is lower than the original value. The power reference may also be limited in proportion to the state of charge once the state of charge is below a certain limit value.

The upper level controller act also to synchronize the operation between the grid side converter and the generator side converter. Once the torque reference Tref is changed, the change also affects the obtained power from the generator, and thereby the power reference given to the grid side converter needs to be changed.

According to an aspect of the invention, the generated power from the converter system is ramped down when a shut-down of the system is needed or requested. A shut-down may be demanded by the operator of the system or required when a component in the system is malfunctioning. According to an embodiment, during a shut down the power reference is ramped to zero, and the battery system provides power for the period of ramping down. Preferably the capacity of the battery system is designed in accordance with the ramping-down procedure such that the energy from the battery is able to sustain the operation and provide power for a ramping down period.

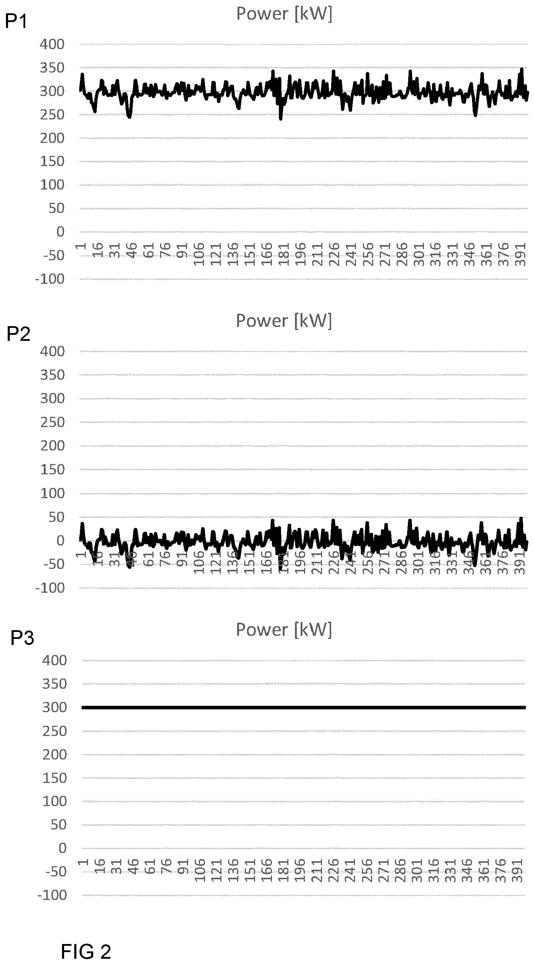

Figure 2 shows examples of power waveforms in different positions of the converter structure of Figure 1. Waveform P1 shows power outputted from a generator. As can be seen, the waveform P1 fluctuates heavily due to changing input power which rotates the generator. Waveform P2 of Figure 2, which is also marked in Figure 1, shows the power flow between the battery 4 and the DC/DC converter of the embodiment. As seen, the power fluctuates around zero and changes its directions. When power of waveform P2 is positive, the direction of power is towards the battery system and when the waveform is negative, the power flows towards the DC bus. The flow of power is due to the controlling of the DC link voltage to the reference value. Further, waveform P3 shows power at the output of the converter system. As can be seen, the power is kept constant and it is the sum of waveforms P1 and P2. In the example, the reference value for power is 300kW.

In the invention, the fluctuation of power is compensated by controlling the DC link voltage to a desired level using a battery-energy storage system. The constant DC link voltage enables to provide constant flow of power to the grid.

In the method in connection with the above described converter system the DC link voltage is controlled with the DC/DC converter and the grid side converter is operated with a power reference. The method of the invention is described above in connection with the operation of the converter system in detail.

It will be obvious to a person skilled in the art that, as the technology advances, the inventive concept can be implemented in various ways. The invention and its embodiments are not limited to the examples described above but may vary within the scope of the claims.

## Claims

1. A converter system comprising a generator side converter connectable to a generator and a grid side converter connectable to a grid, the generator side converter and the grid side converter being connected to each other with a DC bus, wherein the converter system comprises further a DC/DC converter and a battery-energy storage system, the DC/DC converter being connected between the DC bus and the battery-energy storage system, wherein the DC/DC converter is adapted to control the DC link voltage and the grid side converter is adapted to be operated with a power reference.

2. A converter system according to claim 1, wherein the converter system comprises further an upper level controller, the upper level controller being adapted to provide a reference value for the DC/DC converter to control the DC link voltage.

3. A converter system according to claim 2, wherein the DC/DC converter is a bi-directional converter adapted to feed power to the DC link when the voltage of the DC link is below the reference value and to the battery-energy storage system when the voltage of DC link is above the reference value.

4. A converter system according to claim 2 or 3, wherein the upper level control system is adapted to provide the power reference to the grid side converter.

5. A converter system according to claim 4, wherein the upper level control system is adapted to receive information of the state of charge of the battery-energy storage system and to change value of the power reference based on the state of charge of the battery-energy storage system.

6. A converter system according to any one of the previous claims 1 to 5, wherein the upper level control system is adapted to change the power reference upon receipt of a shut-down request, such that the power reference is ramped down and the power for the ramp down period is drawn from the battery-energy storage system.

7. A converter system according to any one of the previous claims 1 to 6, wherein the converter system is a full power converter system.

8. A method in connection with a converter system, the converter system comprising a generator side converter connectable to a generator and a grid side converter connectable to a grid, the generator side converter and the grid side converter being connected to each other with a DC bus, wherein the converter system comprises further a DC/DC converter and a battery-energy storage system, the DC/DC converter being connected between the DC bus and the battery-energy storage system, the method comprising
controlling the DC link voltage with the DC/DC converter and
operating the grid side converter with a power reference.
